(19) Europäisches Patentamt
European Patent Office
Office européen des brevets

(11) **EP 4 008 105 B1**

(12) **EUROPÄISCHE PATENTSCHRIFT**

(45) Veröffentlichungstag und Bekanntmachung des Hinweises auf die Patenterteilung:
**11.10.2023   Patentblatt 2023/41**

(21) Anmeldenummer: **20751124.7**

(22) Anmeldetag: **03.08.2020**

(51) Internationale Patentklassifikation (IPC):
**H04N 13/128** *(2018.01)*      **H04N 13/00** *(2018.01)*

(52) Gemeinsame Patentklassifikation (CPC):
**H04N 13/128;** H04N 2013/0081

(86) Internationale Anmeldenummer:
**PCT/EP2020/071834**

(87) Internationale Veröffentlichungsnummer:
**WO 2021/023723 (11.02.2021 Gazette 2021/06)**

(54) **VERFAHREN UND VORRICHTUNG FÜR EINE ADAPTIVE DISPARITÄTSKONTROLLE**

METHOD AND DEVICE FOR AN ADAPTIVE DISPARITY CONTROL

PROCÉDÉ ET DISPOSITIF DE CONTRÔLE ADAPTATIF DES DISPARITÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2019   DE 102019120998**

(43) Veröffentlichungstag der Anmeldung:
**08.06.2022   Patentblatt 2022/23**

(73) Patentinhaber: **Psholix AG**
**4051 Basel (CH)**

(72) Erfinder: **NASKE, Rolf-Dieter**
**21255 Kakenstorf (DE)**

(74) Vertreter: **Müller Schupfner & Partner**
**Patent- und Rechtsanwaltspartnerschaft mbB**
**Schellerdamm 19**
**21079 Hamburg (DE)**

(56) Entgegenhaltungen:
WO-A1-2011/121397     US-A1- 2013 162 764

**Beschreibung**

Die vorliegende Erfindung betrifft eine adaptive Disparitätskontrolle und hat das Ziel in einem Stereobild oder einer Stereobildfolge die Disparität für jedes empfangene Stereobild an die optischen Eigenschaften der verwendeten Anzeigevorrichtung so anzupassen, dass der räumliche Tiefeneindruck für den Betrachter optimal, d.h. klar und räumlich ist.

*Beschreibung des Standes der Technik und Aufgabenstellung*

In den letzten Jahren wurden sehr viele stereoskopische Anzeigevorrichtungen, d.h. Displays und Fernseher mit einer 3D-Brille eingeführt. Dies führte dazu, dass sehr viele stereoskopische, d.h. 3D-Videos und Filme mit jeweils zwei Perspektiven erstellt wurden, welche für eine stereoskopische Betrachtung mit einer 3D-Brille optimiert waren. Zwei Perspektiven bedeutet dabei, dass jede Szene von mindestens zwei Betrachtungspositionen aufgenommen wurde.

Unter 3D-Brille soll im Folgenden auch eine am Kopf des Betrachters befestigte Anzeigevorrichtung, ein sogenanntes Head-Mounted Display (HMD) mit verstanden werden.

Da bei diesen 3D-Videos jedes Auge genau diejenige Perspektive sieht, welche für dieses Auge aufgenommen wurde, war es erforderlich, dass die Stereobasis der aufnehmenden Kameras für einen natürlichen Betrachtungseindruck identisch war mit dem allgemeinen Augenabstand. Unter der Stereobasis soll im Folgenden der Abstand der beiden äußersten Kameraobjektive verstanden werden. Der Augenabstand liegt im Durchschnitt bei ca. 65 mm und somit war der Abstand der beiden Kameraobjektive im Allgemeine auch auf 65 mm eingestellt. Bei der Betrachtung dieser Videos und Filme hat der Betrachter dann den Eindruck, dass ihm Gegenstände / Objekte entgegenkommen oder sich weiter im Hintergrund befinden.

Dieser Eindruck wird dadurch hervorgerufen, dass sich korrespondierende Bildpunkte in den beiden den Augen zugeführten Perspektiven an verschiedenen Pixelpositionen befinden. Korrespondierende Bildpunkte sind dabei solche Bildpunkte, die denselben Punkt in der realen Szene anzeigen.

Durch den Abstand der beiden Augen wird dieser Punkt auf unterschiedliche Positionen auf der Retina abgebildet. Diesen Unterschied benutzt das Gehirn, um das sogenannte innere Raumbild zu erzeugen, bei dem genau erkannt werden kann, welche Objekte sich im Vordergrund, im Mittelgrund oder im Hintergrund befinden.

Eine Stereokamera bildet diese realen Punkte auf unterschiedliche Pixelpositionen in der linken und rechten aufgenommenen Perspektive ab. Der Abstand dieser unterschiedlichen Pixelpositionen des gleichen Punktes aus der Realität wird als Disparität bezeichnet. Bei der Betrachtung durch eine 3D-Brille werden diese unterschiedlichen Pixelpositionen auch auf unterschiedliche Retina-Positionen projiziert. Die unterschiedlichen Retina-Positionen kann das Gehirn dann zur Erzeugung des inneren Raumbildes verwenden. Man sieht das Video oder den Film räumlich und realistisch, weil die Stereobasis der Kamera, d.h. der Abstand der Aufnahme-Objektive identisch ist mit dem Augenabstand, ca. 65mm. Diese 3D-Brillen-Technologie konnte sich jedoch auf Dauer, zumindest im Massenmarkt, nicht durchsetzen.

Daher wurde eine Technologie entwickelt, bei der das räumliche Sehen eher wie das Betrachten einer Außenwelt durch ein Fenster empfunden wird Diese Technologie wurde Autostereoskopie genannt. Dabei wird dem Display/Fernseher ein optisches Element vorgesetzt, welches dafür sorgt, dass die beiden Augen unterschiedliche Pixel auf dem Display sehen. Wenn auf den unterschiedlichen Pixeln, die jeweils von linken und rechten Auge gesehen werden können, unterschiedliche Perspektiven angezeigt werden, kann das Gehirn daraus wieder das innere Raumbild erzeugen.

Der Vorteil ist, dass man keine 3D-Brille mehr tragen muss. Der Nachteil ist jedoch, dass man bei der Betrachtung nur an einer einzigen Position vor dem Display einen guten Raumeindruck hat. Im Folgenden sollen die Begriffe Display und Fernseher synonym verwendet werden.

Eine Weiterentwicklung dieser Technologie führte dazu, dass das optische Element so konstruiert ist, dass sich vor dem Display sogenannte Sehzonen einer gewissen Breite ergeben, in denen man immer zwei unterschiedliche Perspektiven sehen kann, also das Gehirn ein inneres Raumbild erzeugen kann.

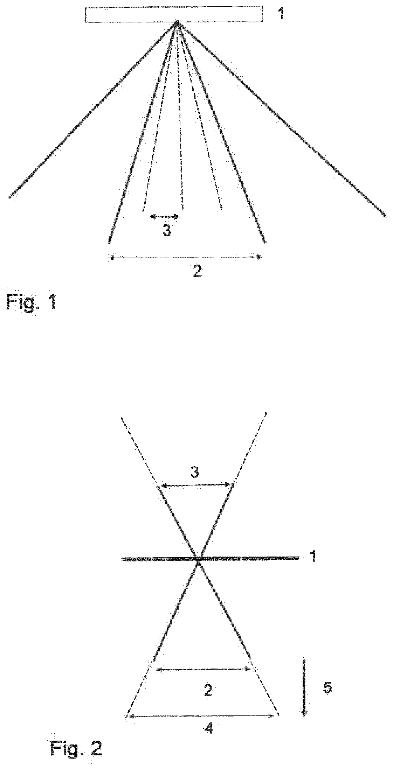

Die Breite dieser Sehzonen wird durch die optischen Eigenschaften des optischen Elementes bestimmt und kann z.B. zwischen 20 cm und 60 cm liegen. Dabei werden nicht nur zwei Perspektiven in jeder Sehzone angezeigt, sondern zwischen 5 und einigen tausend Perspektiven. Das Grundprinzip der Sehzonen ist in Fig. 1 dargestellt.

Vor dem Display haben alle Sehzonen die gleiche optische Struktur. Der Vorteil ist auch hier, dass man keine 3D-Brille tragen muss, und, dass in jeder Sehzone ein gewisser "Walk-Around"-Effekt entsteht, d.h. dass man sich frei bewegen kann, ohne den 3D-Eindruck zu verlieren, ähnlich einem Hologramm. Das Grundprinzip besteht dabei darin, dass die linkste aufgenommen Perspektive an den linken Rand der Sehzone projiziert wird und die rechteste aufgenommene Perspektive an den rechten Rand der Sehzone. Dazwischen wird dann eine gewisse Anzahl von Perspektiven erzeugt und angezeigt.

Beträgt die Sehzonenbreite z.B. n Zentimeter, die Stereobasis der Stereokamera k Zentimeter und der Augenabstand b Zentimeter, so sehen die beiden Augen zwei Perspektiven, die einen Abstand von

$$b' = k/n \cdot b$$

haben.

Sei z.B. die Stereobasis der Kamera k = 5 cm, die Sehzonenbreite n = 30 cm und der Augenabstand b = 6 cm, so ergibt sich b' = 5/30 ∙ 6 = 30/30 = 1,0 cm. Die beiden Perspektiven, die der Betrachter sieht, haben also nur noch einen Abstand von 1 cm statt der gewünschten 6 cm.

Für die Betrachtung mit der 3D-Brille hätten die beiden betrachteten Perspektiven weiterhin den aufgenommenen Perspektivenabstand von 5 cm. Für eine autostereoskopische Betrachtung ist dagegen der 3D-Eindruck fast gleich null, weil die Disparität fast überall gleich null, also 2D, ist.

Durch das hier beschriebene Verfahren und die Vorrichtung soll dieser Nachteil beseitigt werden.

Andererseits darf die Disparität auch nicht zu groß sein. Bei einer 3D-Brille tritt dieser Fall ein, wenn ein Objekt z.B. zu stark aus dem Display heraustritt. ("Pop-Out-Effekt"). Die Disparität wird dann zu groß und es wird unangenehm und kann auf Dauer zu Kopfschmerzen und Augendruck führen. Daher ist eine Anwendung der hier vorgestellten Verfahren auch für 3D-Brillen sinnvoll und ist inkludiert.

Bei einem autostereoskopischen Display führt dies dazu, dass das innere Raumbild zerfällt. Das Gehirn kann die korrespondierenden Bildpunkte nicht mehr gemeinsam erfassen und zusammenführen, sondern erkennt sie als zwei getrennte, unterschiedliche Bildpunkte. Dieser Fall tritt bei jedem autostereoskopischen Display ein, wenn das angezeigte 3D-Objekt den sogenannten Nahpunkt oder den sogenannten Fernpunkt überschreitet. Als Nah- bzw. Fernpunkt werden diejenigen Punkte aus der realen Szene bezeichnet, ab0020welchen das Gehirn korrespondierende Punkte der realen Szene nicht mehr zusammenführen kann, weil die Disparität in den beiden den Augen zugeführten Perspektiven betragsmäßig zu groß ist. Ab diesem Punkt "zerfällt" dann das innere Raumbild.

Diese Nah- und Fernpunkte hängen vom verwendeten optischen Element und seinen optischen Eigenschaften ab und sind für unterschiedliche Displays unterschiedlich. Ein Aspekt, aber nicht der einzige, ist dabei z.B. die Sehzonenbreite.

Es muss also für einen guten räumlichen Eindruck eine Disparität vorhanden sein, die sich an den Grenzen des Nah- und Fernpunktes orientiert. Sie darf nicht zu groß sein und nicht zu klein sein, um einen für den Betrachter angenehmen räumlichen Eindruck zu erzeugen.

US 2013/162764 A1 offenbart eine Bildverarbeitungsvorrichtung und insbesondere eine Verarbeitung zum Komplementieren eines Bildes nach der Einstellung einer binokularen Disparität in jedem der stereoskopischen Bildrahmen eines stereoskopischen Bewegtbildes.

In der EP 2393298 A1wird ein Verfahren vorgeschlagen, bei welchem die Disparitäten verändert werden, um den räumlichen Tiefeneindruck zu verbessern. Allerdings offenbart die EP 2393298 A1, dass zwei neue Perspektiven erzeugt werden und diese zur Berechnung einer verbesserten Disparitätskarte verwendet werden und dabei so vorgegangen wird, dass die Disparität nur um einen bestimmten maximalen Betrag verändert wird, um es nicht zu sprunghaften Veränderungen im 3D-Tiefeneindruck kommen zu lassen.

*Zusammenfassung der Erfindung*

Die Erfindung ist durch die unabhängigen Patentansprüche gekennzeichnet, bevorzugte Ausführungsformen sind Gegenstand der Unteransprüche oder nachfolgend beschrieben.

Die Erfindung wird durch die unabhängigen Ansprüche definiert. Die abhängigen Ansprüche definieren vorteilhafte Ausführungsformen.

*Beschreibung des Verfahrens im Detail*

Der Stand der Technik (Fig.1) und die Erfindung (Fig. 2 bis 3) sind anhand nachfolgender Figuren erläutert, ohne dass die Erfindung auf die dargestellten Ausführungsformen beschränkt wäre.

> **Fig. 1:** Darstellung der Sehzonen und der in diesen Sehzonen angezeigten Perspektiven in der Draufsicht.
>
> > 1 Display
> > 2 Sehzone
> > 3 Bereich, in welchem eine einzelne Perspektive innerhalb der Sehzone sichtbar ist
>
> **Fig. 2:** Fall 1, in welchem die maximale Disparität des angezeigten Bildes geringer ist als die optimale Disparität. Die maximale Disparität muss vergrößert werden.
>
> > 1 Displayoberfläche, bei der Parallaxe = 0 ist
> > 2 $D_{max} = D_{vorn}$
> > 3 $D_{hinten}$
> > 4 $D_{opt}$
> > 5 Stereobasis-Verbreiterung um einen Faktor $F_{opt} > 1$
>
> **Fig. 3:** Fall 2, in welchem die maximale Disparität des angezeigten Bildes größer ist als die optimale Disparität. Die maximale Disparität muss verkleinert werden.
>
> > 1 Displayoberfläche, bei der Parallaxe = 0 ist
> > 2 $D_{max} = D_{vorn}$
> > 3 $D_{hinten}$
> > 4 $D_{opt}$

5 Stereobasis-Verbreiterung um einen Faktor $F_{opt} < 1$

**Fig. 4:** Flussdiagramm zur Anpassung der gemessenen Disparität $D_{max}$ an die optimale Disparität $D_{opt}$ des verwendeten Displays mit J = Ja und N = Nein.

1 $D_{opt}$ einlesen
2 Neues Stereobild einlesen
3 Neues Bild verfügbar?
4 Disparitäten für Disparitätskarte berechnen
5 Maximale Disparität $D_{max}$ berechnen
6 $F_{opt} = D_{opt}/D_{max}$berechnen
7 $F_{opt} = 1$?
8 Stereobasisverbreiterung oder Stereobasisverkleinerung durchführen, je nachdem ob $F_{opt}$ größer oder kleiner als 1 ist
9 Ausgabebild erzeugen

Die Anzeigevorrichtung ist ein stereoskopisches Display, insbesondere ein autostereoskopisches Display oder eine 3D-Brille inklusive HMD.

$D_{opt}$, die optimale Disparität der verwendeten Anzeigevorrichtung, ist diejenige Disparität bei der der Betrachter einen guten räumlichen Eindruck hat. In einem ersten Schritt wird für ein empfangenes Stereobild die maximale Disparität berechnet. Unter einem Stereobild sei im Folgenden immer ein Bild mit mindesten zwei Perspektiven verstanden. Es kann auch das stereoskopische Einzelbild einer stereoskopischen Stereobildfolge sein. Zur Berechnung dieser Disparitäten sind diverse Verfahren in der Literatur bekannt. Dies könnte z.B. das Verfahren von Falkenhagen (L. Falkenhagen "Blockbasierte Disparitätsschätzung unter Berücksichtigung statistischer Abhängigkeiten der Disparität", Fortschr.-Ber., VDI-Reihe 10 Nr. 657, Düsseldorf 2001, ISBN 3-18-365710-4.) oder Kauff (Peter Kauft, "Verfahren zur Korrespondenzanalyse von Bildmerkmalen in korrespondierenden Videobildern in Echtzeit", DE 10105423 C1) sein.

Dabei ergibt sich bei Objekten, die vor der Displayoberfläche der Anzeigevorrichtung erscheinen eine positive Disparität und bei Objekten, die hinter der Displayoberfläche der Anzeigevorrichtung erscheinen eine negative Disparität. Die betragsmäßig maximale Disparität nach vorne, d.h. in Richtung des Betrachters, sein $D_{vorn}$ und die betragsmäßig maximale Disparität nach hinten, d. h. vom Betrachter weg, sei mit $D_{hinten}$ bezeichnet. Die maximale Disparität $D_{max}$ ergibt sich dann als:

$$D_{max} := \max(\, |\, D_{vorn}\, |,\ \, |\, D_{hinten}\, |\, ).$$

d.h die die maximale Disparität ergibt sich stets als positiver Betragswert.

Ist $D_{max} = D_{opt}$, so werden alle anzuzeigenden Perspektiven unverändert angezeigt und das nächste Bild empfangen, bei welchem wieder wie oben vorgegangen wird.

Ist jedoch $D_{max} \neq D_{opt}$, so sind 2 Fälle zu unterscheiden: $D_{max} > D_{opt}$ und $D_{max} < D_{opt}$.

Sei zunächst $D_{max} < D_{opt}$, so erscheint auf der Anzeigevorrichtung ein räumliches Bild mit zu geringer räumlicher Tiefe. Die Disparität $D_{max}$ muss vergrößert werden.

Dieser Fall ist in Fig. 2 dargestellt. Eine Vergrößerung der Disparität ergibt sich z.B. durch zwei mögliche Änderungen. Man kann entweder die Stereobasis der empfangenen Perspektiven vergrößern, indem man die Kamera-Objektive weiter auseinander schiebt oder man verdreht die Objektive, wodurch sich die Parallaxe verschiebt. Die Parallaxe bezeichnet dabei den Schnittpunkt der beiden Objektiv-Blickrichtungen. Alle Punkte in der realen Szene, welche durch den gleichen Abstand von den Kameraobjektiven haben wie der Schnittpunkt der beiden Objektiv-Blickrichtungen, besitzen eine Disparität von 0 und werden bei der Anzeige auf der Anzeigevorrichtung als auf der Displayoberfläche der Anzeigevorrichtung empfunden.

Den ersten Fall kann man mit Verfahren der digitalen Bildverarbeitung durch die Erzeugung von synthetischen Perspektiven (weitere berechnete Perspektiven) erreichen, welche sich in Blickrichtung der Kameraobjektive links und rechts von der linksten und rechtesten aufgenommen Kameraperspektive befinden.

Dazu werden die sich durch die Disparitätsberechnung ergebenden Korrespondenzen zwischen Pixeln in der linksten Perspektive und der rechtesten Perspektive als Korrespondenzlinien interpretiert und um eine Faktor F verlängert. An den sich so ergebenden neuen Pixelpositionen werden dann die Pixel aus den zugeführten Perspektiven gespeichert. Dadurch ergeben sich zwei neue Perspektiven, die weiter auseinanderliegen und damit automatisch die Disparität $D_{max}$ vergrößern. Details sind z.B. im Verfahren von Naske (I.-H. Naske et al, "Verfahren und Vorrichtung zur Stereobasis-Erweiterung von stereoskopischen Bildern und Bildfolgen", Patentschrift DE102011008886A1, 19.1.2011) zur Stereobasis-Verbreiterung beschrieben.

Im zweiten Fall ergibt sich eine komplexe Bildtransformation der beiden Perspektiven.

Falls man das erste Verfahren der Stereobasis-Verbreiterung anwendet, so ergeben sich automatisch zwei neue linke und rechte Perspektiven und eine neue zugehörige Disparitätskarte, welche für jeden Bildpunkt die neue Disparität angibt oder ihn als Links- oder Rechtsverdeckung kennzeichnet.

Als Disparitätskarte wird im Folgenden die Matrix bezeichnet, welche für jeden Bildpunkt aus der linksten Perspektive seine Disparität zu seinem zugehörigen Bildpunkt in der rechtesten Perspektive angibt.

Ist, wie erwähnt, $D_{max} = D_{opt}$, so muß eine neue Disparitätsberechnung nicht durchgeführt werden, da die empfangenen Stereobilder unverändert angezeigt werden. Der Faktor $F_{opt}$, um welchen die Stereobasis vergrößert werden muss, falls $D_{max} < D_{opt}$ ist, ergibt sich als

$$F_{opt} := D_{opt} / D_{max} > 1.$$

Danach ist $D_{max} = D_{opt}$.

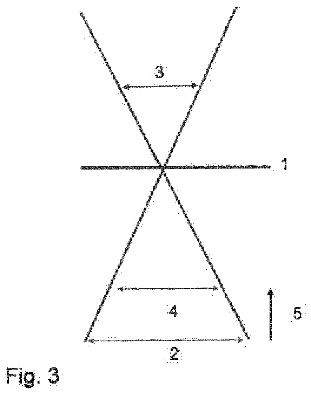

Sei nun $D_{max} > D_{opt}$, so zerfällt das Raumbild. Es gibt Objekte, die über den Nahpunkt oder Fernpunkt der Anzeigevorrichtung hinausgehen. Dieser Fall ist in Fig. 3 dargestellt. In diesem Fall ist

$$F_{opt} := D_{opt} / D_{max} < 1.$$

Verfahrenstechnisch kann dafür das gleiche Verfahren der Stereobasis-Verbreiterung angewendet werden, wobei formal die Stereobasis nicht vergrößert, sondern verkleinert wird. Da aber $F_{opt}$ als Faktor F aus der obigen Beschreibung verwendet wird, ist dies algorithmisch identisch.

Nur dass die zwei sich neu ergebenden Perspektiven dichter beieinander liegen und damit $D_{max}$ automatisch verkleinert wird.

Es ergeben sich ebenfalls zwei neue linke und rechte Perspektiven und eine neue Disparitätskarte. Danach ist ebenfalls $D_{max} = D_{opt}$. Die räumliche Tiefe befindet sich im idealen Bereich.

In beiden Fällen werden die linke und rechte Perspektive ebenso wie dazugehörige neue Disparitätskarte vollständig neu berechnet und im nachfolgenden Verfahrensschritt als Eingabe zur Bilderzeugung verwendet.

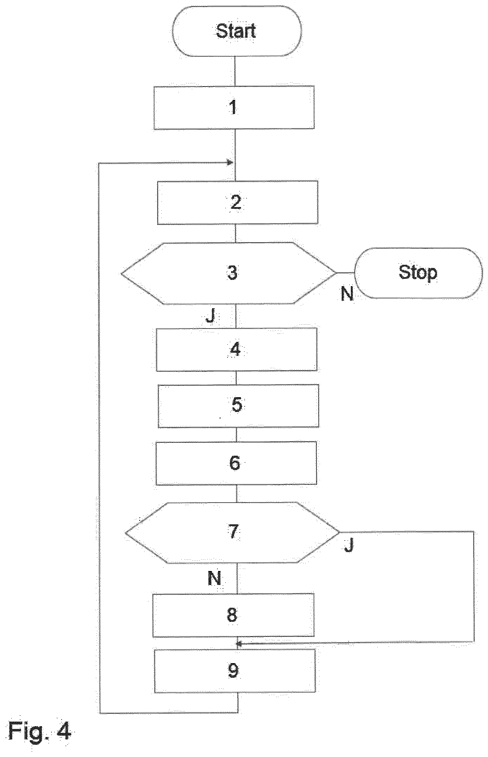

In einer ersten Ausführungsform wird nach Empfang eines Stereobildes zunächst die Disparitätskarte berechnet. In einem weiteren Schritt wird daraus $D_{vorn}$ und $D_{hinten}$ errechnet. Die weiteren Schritte zur Berechnung von $D_{max}$, $D_{opt}$ und $F_{opt}$ ergeben sich sodann wie oben beschrieben. Ein Flussdiagramm ist in Fig. 4 dargestellt.

In einer zweiten Ausführungsform wird neben dem Stereobild oder -Video auch eine Disparitätskarte empfangen. Eine verfahrens-interne Berechnung aller Disparitäten braucht in diesem Fall nicht durchgeführt zu werden. Die oben beschriebenen Verfahren zur Berechnung von $D_{vorn}$, $D_{hinten}$, $D_{max}$, $D_{opt}$ und $F_{opt}$ können nach Empfang der Disparitätskarte in gleicher Weise angewendet werden.

Beide Ausführungsformen müssen für jedes empfangene Stereobild oder -Video durchgeführt werden, sodass sich ein permanentes an die empfangene Bildqualität adaptiertes Verfahren ergibt. Daher wird dieses Verfahren auch als adaptives Verfahren bezeichnet.

Diese Adaptierung darf jedoch nicht zu stark sein. Wird z.B. in einem Stereo-Video zwischen zwei aufeinander folgenden Stereobildern der Faktor $F_{opt}$ sehr groß, weil das Stereobild einen sehr starken "Pop-out"-Effekt beinhaltet, oder sehr klein, weil das Stereobild fast 2D zeigt, so sollte sich der Faktor $F_{opt}$ nur schrittweise verändern. Eine zu starke sprunghafte Veränderung würde beim Betrachter als eine unangenehme sprunghafte Veränderung der 3D-Tiefe wahrgenommen werden.

Daher muss jeder Faktor $F_{opt}$ als $F_{opt}^{alt}$ gespeichert werden und bei der Berechnung des nachfolgenden Stereobildes berücksichtigt werden. Die Veränderung sollte in jedem Fall eine Schrittweite $D_F$ mit $0 < D_F < 1$ nicht überschreiten. Ein neues $F_{opt}$ muss daher der Bedingung

$$F_{opt} <= F_{opt}^{alt} + D_F$$

erfüllen, falls $F_{opt} < 1$. Ist dies nicht der Fall so wird

$$F_{opt} := F_{opt}^{alt} + D_F$$

gesetzt. Falls $F_{opt} > 1$ gilt, so muss die Bedingung

$$F_{opt} >= F_{opt}^{alt} - D_F$$

erfüllt sein. Ist dies nicht der Fall so wird

$$F_{opt} := F_{opt}^{alt} - D_F$$

gesetzt. Danach wird $F_{opt}^{alt} := F_{opt}$ für das nachfolgende Stereobild gespeichert.

Wie häufig die Disparität geändert werden muss, hängt dabei immer vom Inhalt ab. Bei einem Fußballspiel z.B., bei dem häufig und schnell zwischen Fernaufnahmen vom Stadiondach und Nahaufnahmen von Spielfeldrand umgeschaltet wird, kommt das Verfahren sehr gut zum Tragen.

In einer weiteren Ausführungsform kann ein Betrachter die für die Anzeigevorrichtung voreingestellte optimale Disparität $D_{opt}$ interaktiv verändern. Die geänderte optimale Disparität $D_{opt}$ wird dann als neue für die Anzeigevorrichtung voreingestellte optimale Disparität $D_{opt}$ verwendet, die dann auf die weiteren Folgen von Stereobildern angewandt wird. Das heißt, er kann den Nah- und Fernpunkt der verwendeten Anzeigevorrichtung an sein persönliches Sehempfinden anpassen.

Dies trägt der Tatsache Rechnung, dass die Augen der Betrachter verglichen mit der Werkseinstellung für die Anzeigevorrichtung unterschiedliche Eigenschaften haben können. Diese Ausführungsform kann bei allen Anzeigevorrichtungen, autostereoskopische Displays und 3D-Brille, verwendet werden und ist unabhängig davon, ob die Disparitätskarte berechnet oder empfangen wurde.

**Patentansprüche**

1. Verfahren zur Verbesserung des räumlichen Tiefeneindrucks eines zugeführten Stereobildes oder einer Folge von Stereobildern mit jeweils mindestens zwei zugeführten Perspektiven bei der Darstellung der anzuzeigenden Perspektiven auf einer stereoskopischen Anzeigevorrichtung,

wobei die Anzeigevorrichtung eine vorher festgelegte optimale Disparität $D_{opt}$ aufweist und für mindestens ein Stereobild die maximale Disparität von der optimalen Disparität $D_{opt}$ abweicht, und das Verfahren zumindest die folgenden Schritte umfasst:

- Berechnen oder Zuführen einer Disparitätskarte für das jeweilige zugeführte Stereobild, wobei die jeweilige Disparität in der Disparitätskarte die Differenz der Pixelpositionen eines gleichen realen Punktes in der linksten und rechtesten Perspektive des zugeführten Stereobildes bezeichnet und die maximale Disparität $D_{max}$ das betragsmäßige Maximum aller Disparitäten in der Disparitätskarte des jeweiligen zugeführten Stereobildes ist, und

für den Fall, dass die maximale Disparität von der optimalen Disparität $D_{opt}$ abweicht unter Verwendung der berechneten oder zugeführten Disparitätskarte neue linkste und rechteste Perspektiven des zugeführten Stereobilds so berechnet werden, dass sich für die berechnete linkste und rechteste Perspektive eine maximale Disparität ergibt, die gleich der optimalen Disparität $D_{opt}$ des zugeführten Stereobildes ist; wobei die Anzeigevorrichtung eine vorher festgelegte optimale Disparität $D_{opt}$ und eine maximale Veränderungsschrittweite $D_F$ aufweist und

- für den Fall, dass die maximale Disparität von der optimalen Disparität $D_{opt}$ abweicht neue linkste und rechteste Perspektiven berechnet werden, deren betragsmäßig maximale Disparität gleich der optimalen Disparität $D_{opt}$ ist oder sich um maximal den Betrag $D_F > 0$ an die optimale Disparität $D_{opt}$ annähert; wobei
- falls $D_{max} < D_{opt}$ ist, der Faktor $F_{opt}$ um welchen die Stereobasis vergrößert werden muss

$$F_{opt} := D_{opt} / D_{max} > 1.$$

ist,
- falls $D_{max} > D_{opt}$ ist, der Faktor $F_{opt}$ um welchen die Stereobasis verkleinert werden muss

$$F_{opt} := D_{opt} / D_{max} < 1.$$

ist, wobei jeder Faktor $F_{opt}$ als $F_{opt}^{alt}$ gespeichert wird und bei der Berechnung des nachfolgenden Stereobildes berücksichtigt wird und

die Veränderung eine Schrittweite $D_F$ mit $0 < D_F < 1$ nicht überschreitet, wobei falls $F_{opt} < 1$ ist, erfüllt ein neues $F_{opt}$ die Bedingung

$$F_{opt} <= F_{opt}^{alt} + D_F ,$$

und ist dies nicht der Fall, so wird

$$F_{opt} := F_{opt}^{alt} + D_F$$

gesetzt;
wobei falls $F_{opt} > 1$ gilt, erfüllt eines neues $F_{opt}$ die Bedingung

$$F_{opt} >= F_{opt}^{alt} - D_F$$

und ist dies nicht der Fall so wird

$$F_{opt} := F_{opt}^{alt} - D_F$$

gesetzt und
danach wird $F_{opt}^{alt} := F_{opt}$ für das nachfolgende Stereobild gespeichert.

2. Verfahren nach Anspruch 1, wobei dem Verfahren eine Folge von Stereobildern zugeführt wird, wobei die berechnete maximale Disparität $D_{max}$ des vorherigen Stereobildes der Folge von Stereobildern als Eingabewert für das nachfolgende Stereobild der Bildfolge verwendet wird, dergestalt dass die maximale Disparität des aktuellen Stereobildes maximal um den Betrag $D_F$ verändert wird.

3. Verfahren nach zumindest einem der vorhergehenden Ansprüche, wobei die Anzeigevorrichtung eine autostereoskopische Anzeigevorrichtung ist, vorzugsweise umfassend ein autostereoskopisches Display und ein optisches Element.

4. Verfahren nach zumindest einem der Ansprüche 1 oder 2 , wobei die Anzeigevorrichtung eine 3D-Brille ist.

5. Verfahren nach zumindest einem der vorhergehenden Ansprüche, wobei zumindest für ein zugeführtes Stereobild, vorzugsweise für alle Stereobilder der Folge von Stereobildern, jeweils eine Disparitätskarte zugeführt wird.

**6.** Verfahren nach zumindest einem der Ansprüche 1 bis 5, wobei ein Betrachter die für die Anzeigevorrichtung voreingestellte optimale Disparität $D_{opt}$ interaktiv verändert, so dass diese seinen Sehgewohnheiten entspricht, wobei die geänderte optimale Disparität $D_{opt}$ dann als neue für die Anzeigevorrichtung voreingestellte optimale Disparität $D_{opt}$ verwendet wird, die dann als neue gerätespezifische Konstante auf die weiteren Folgen von Stereobildern angewandt wird.

**7.** Vorrichtung zur Durchführung des Verfahrens zur Verbesserung des räumlichen Tiefeneindrucks eines zugeführten Stereobildes oder einer Folge von Stereobildern mit jeweils mindestens zwei zugeführten Perspektiven nach zumindest einem der Ansprüche 1 bis 6, wobei die Vorrichtung zumindest folgende Einheiten umfasst:

- eine Analyseeinheit

a) zur Berechnung der Disparitätskarte des zugeführten Stereobildes umfassend zugefügte Perspektiven oder der Folge von Stereobildern und Berechnung der maximalen Disparität jedes Stereobildes aus der berechneten Disparitätskarte oder
b) zur Berechnung der maximalen Disparität jedes Stereobildes aus der zugeführten Disparitätskarte jedes Stereobildes;

- eine Syntheseeinheit zur Berechnung und Erzeugung der linksten und rechtesten anzuzeigenden Perspektive des Stereobildes oder jedes Stereobildes der Folge für den Fall, dass die maximale Disparität von der optimalen Disparität $D_{opt}$ abweicht, so dass sich für die berechnete linkste und rechteste Perspektive eine maximale Disparität ergibt, die gleich der optimalen Disparität $D_{opt}$ ist oder sich maximal um den Betrag $D_F > 0$ an die optimale Disparität $D_{opt}$ annähert, und
- eine Darstellungseinheit umfassend zumindest die Anzeigevorrichtung zur Anzeige der Perspektiven umfassend die berechneten linksten und rechtesten Perspektiven und die zugeführten Perspektiven, auf der verwendeten Anzeigevorrichtung, wobei die Anzeigevorrichtung eine gerätespezifische optimale Disparität $D_{opt}$ aufweist.

**8.** Vorrichtung nach Anspruch 7, wobei die Anzeigevorrichtung eine autostereoskopische Anzeigevorrichtung ist, vorzugsweise umfassend ein autostereoskopisches Display und ein optisches Element, oder eine 3D-Brille ist.

**Claims**

**1.** A method for improving the spatial impression of depth of a supplied stereo image or of a sequence of stereo images, each with at least two supplied perspectives when representing the perspectives to be displayed on a stereoscopic display device, wherein the display device has a predetermined optimal disparity $D_{opt}$ and the maximum disparity for at least one stereo image deviates from the optimal disparity $D_{opt}$, and the method comprises at least the following steps:

- calculating or supplying a disparity card for the respective supplied stereo image, wherein the respective disparity in the disparity card identifies the difference of the pixel positions of an identical physical point in the leftmost and rightmost perspective of the supplied stereo image, and the maximum disparity $d_{max}$ is the maximum amount of all disparities in the disparity card of the respective supplied stereo image, and in the event that the maximum disparity deviates from the optimal disparity $D_{opt}$, new leftmost and rightmost perspectives of the supplied stereo image are calculated using the calculated or supplied disparity card so that a maximum disparity results for the calculated leftmost and rightmost perspective, which is identical to the optimal disparity $D_{opt}$ of the supplied stereo image; wherein the display device has a predetermined optimal disparity $D_{opt}$ and a maximum increment change $D_F$, and
- in the event that the maximum disparity deviates from the optimal disparity $D_{opt}$, new leftmost and rightmost perspectives are calculated, the maximum disparity amount of which is identical to the optimal disparity $D_{opt}$ or approaches the optimal disparity $D_{opt}$ by maximally the amount $D_F > 0$; wherein
- if $D_{max} < D_{opt}$, the factor $F_{opt}$, by which the stereo base has to be increased, is

$$F_{opt} := D_{opt} / D_{max} > 1,$$

- if $D_{max} > D_{opt}$, the factor $F_{opt}$, by which the stereo base has to be decreased, is

$$F_{opt} := D_{opt} / D_{max} < 1,$$

wherein each factor $F_{opt}$ is stored as $F_{opt}^{alt}$ and is considered during the calculation of the following stereo image, and

the change does not exceed an increment $D_F$ with $0 < D_F < 1$,

wherein, if $F_{opt} < 1$, a new $F_{opt}$ fulfills the condition

$$F_{opt} <= F_{opt}^{alt} + D_F,$$

and if this is not the case, then

$$F_{opt} := F_{opt}^{alt} + D_F$$

is set;
wherein, if $F_{opt} > 1$, a new $F_{opt}$ fulfills the condition

$$F_{opt} >= F_{opt}^{alt} - D_F$$

and if this is not the case, then

$$F_{opt} := F_{opt}^{alt} - D_F$$

is set, and
$F_{opt}^{alt} := F_{opt}$ is then stored for the following stereo image.

2. The method according to claim 1, wherein a sequence of stereo images is supplied to the method, wherein the calculated maximum disparity $D_{max}$ of the previous stereo image of the sequence of stereo images is used as input value for the following stereo image of the image sequence in such a way that the maximum disparity of the current stereo image is maximally changed by the amount $D_F$.

3. The method according to at least any one of the preceding claims, wherein the display device is an autostereoscopic display device, preferably comprising an autostereoscopic display and an optical element.

4. The method according to at least any one of claims 1 or 2, wherein the display device are 3D glasses.

5. The method according to at least any one of the preceding claims, wherein a disparity card is in each case supplied at least for one supplied stereo image, preferably for all stereo images of the sequence of stereo images.

6. The method according to at least any one of claims 1 to 5, wherein an observer interactively changes the optimal disparity $D_{opt}$ preset for the display device so that it corresponds to his viewing habits, wherein the changed optimal disparity $D_{opt}$ is then used as new optimal disparity $D_{opt}$, which is preset for the display device and which is then used as new equipment-specific constant for the further sequences of stereo images.

7. A device for carrying out the method for improving the spatial impression of depth of a supplied stereo image or of a sequence of stereo images, each with at least two supplied perspectives according to at least any one of claims 1 to 6, wherein the device comprises at least the following units:

   - an analysis unit

     a) for calculating the disparity card of the supplied stereo image comprising added perspectives or of the sequence of stereo images and calculating the maximum disparity of each stereo image from the calculated disparity card or
     b) for calculating the maximum disparity of each stereo image from the supplied disparity card of each stereo image;

   - a synthesis unit for calculating and creating the leftmost and rightmost perspective to be displayed of the stereo image or of each stereo image of the sequence in the event that the maximum disparity deviates from the optimal disparity $D_{opt}$, so that a maximum disparity results for the calculated leftmost and rightmost perspective, which is identical to the optimal disparity $D_{opt}$ or which approaches the optimal disparity $D_{opt}$ maximally by the amount $D_F > 0$, and
   - a representation unit comprising at least the display device for displaying the perspectives comprising the calculated leftmost and rightmost perspectives and the supplied perspectives on the used display device, wherein the display device has an equipment-specific optimal disparity $D_{opt}$.

8. The device according to claim 7, wherein the display device is an autostereoscopic display device, preferably comprising an autostereoscopic display and an optical element, or is 3D glasses.

## Revendications

1. Procédé d'amélioration de la définition de profondeur spatiale d'une image stéréo fournie ou d'une succession d'images stéréo ayant respectivement au moins deux perspectives fournies lors de la présentation des perspectives à afficher sur un dispositif d'affichage stéréoscopique,

   dans lequel le dispositif d'affichage présente une disparité optimale fixée au préalable $D_{opt}$ et la disparité maximale diverge de la disparité optimale $D_{opt}$ pour au moins une image stéréo, et ledit procédé comprenant au moins les étapes suivantes consistant à :

- calculer ou fournir une carte de disparité pour l'image stéréo respective fournie, la disparité respective dans la carte de disparité désignant la différence des positions de pixel d'un même point réel dans la perspective la plus à gauche et la plus à droite de l'image stéréo fournie et la disparité maximale $D_{max}$ étant le maximum quantitativement de toutes les disparités dans la carte de disparité de l'image stéréo respective fournie, et

pour le cas où la disparité maximale diverge de la disparité optimale $D_{opt}$ en utilisant la carte de disparité calculée ou fournie, les nouvelles perspectives la plus à gauche et la plus à droite de l'image stéréo fournie étant ainsi calculées qu'il résulte une disparité maximale pour la perspective la plus à gauche et la plus à droite calculée, qui est égale à la disparité optimale $D_{opt}$ de l'image stéréo fournie ; le dispositif d'affichage présentant une disparité optimale fixée au préalable $D_{opt}$ et une largeur de pas de modification maximale $D_F$ et

- pour le cas où la disparité maximale diverge de la disparité optimale $D_{opt}$, les nouvelles perspectives la plus à gauche et la plus à droite étant ainsi calculées que leur disparité maximale quantitativement est égale à la disparité optimale $D_{opt}$ ou s'approche de la disparité optimale $D_{opt}$ au maximum par le montant $D_F > 0$;
- au cas où $D_{max} < D_{opt}$, le facteur $F_{opt}$ par lequel la base stéréo doit être augmentée étant

$$F_{opt} := D_{opt} / D_{max} > 1.$$

- au cas où $D_{max} > D_{opt}$, le facteur $F_{opt}$ par lequel la base stéréo doit être réduite étant

$$F_{opt} := D_{opt} / D_{max} < 1.$$

chaque facteur $F_{opt}$ étant enregistré en tant que $F_{opt}^{alt}$ et étant pris en compte lors du calcul de l'image stéréo suivante et
la modification ne dépassant une largeur de pas $D_F$ avec $0 < D_F < 1$,
au cas où $F_{opt} < 1$, un nouvel $F_{opt}$ satisfaisant la condition

$$F_{opt} <= F_{opt}^{alt} + D_F,$$

et si cela n'est pas le cas, alors

$$F_{opt} := F_{opt}^{alt} + D_F;$$

au cas où $F_{opt} > 1$, un nouvel $F_{opt}$ satisfaisant la condition

$$F_{opt} >= F_{opt}^{alt} - D_F,$$

et si cela n'est pas le cas, alors

$$F_{opt} := F_{opt}^{alt} - D_F$$

et
ensuite, $F_{opt}^{alt} := F_{opt}$ étant enregistré pour l'image stéréo suivante.

2. Procédé selon la revendication 1, une succession d'images stéréo étant fournie au procédé, la disparité maximale $D_{max}$ calculée de l'image stéréo antérieure de la succession d'images stéréo étant utilisée en tant que valeur d'entrée pour l'image stéréo suivante de la succession d'images, de telle sorte que la disparité maximale de l'image stéréo actuelle est modifiée au maximum par le montant $D_F$.

3. Procédé selon au moins l'une des revendications précédentes, dans lequel le dispositif d'affichage est un dispositif d'affichage auto-stéréoscopique, de préférence comprenant un écran auto-stéréoscopique et un élément optique.

4. Procédé selon au moins l'une des revendications 1 ou 2, dans lequel le dispositif d'affichage est une paire de lunettes 3D.

5. Procédé selon au moins l'une des revendications précédentes, dans lequel au moins pour une image stéréo fournie, de préférence pour toutes les images stéréo de la succession d'images stéréo, respectivement une carte de disparité est fournie.

6. Procédé selon au moins l'une des revendications 1 à 5, dans lequel un observateur modifie interactivement la disparité optimale $D_{opt}$ préréglée pour le dispositif d'affichage, de telle sorte que celle-ci correspond à ses habitudes visuelles, dans lequel la disparité optimale $D_{opt}$ modifiée est utilisée alors comme nouvelle disparité optimale $D_{opt}$ préréglée pour le dispositif d'affichage, laquelle est appliquée ensuite comme nouvelle constante spécifique à un appareil pour les successions suivantes d'images stéréo.

7. Dispositif pour la réalisation du procédé d'amélioration de la définition de profondeur spatiale d'une image stéréo fournie ou d'une succession d'images stéréo ayant respectivement au moins deux perspectives fournies selon au moins l'une des revendications 1 à 6, le dispositif comprenant au moins les unités suivantes :

   - une unité d'analyse

   a) pour le calcul de la carte de disparité de l'image stéréo fournie comprenant des perspectives ajoutées ou de la succession d'images stéréo et le calcul de la disparité maximale de chaque image stéréo à partir de la carte de disparité calculée ou
   b) pour le calcul de la disparité maximale de chaque image stéréo à partir de la carte de disparité fournie de chaque image stéréo ;

   - une unité de synthèse pour le calcul et la production de la perspective la plus à gauche et la plus à droite à afficher de l'image stéréo ou de chaque image stéréo de la succession pour le cas où la disparité maximale diverge de la disparité optimale $D_{opt}$ de telle sorte qu'il résulte pour la perspective la plus à gauche et la plus à droite calculée une disparité maximale, qui est égale à la disparité optimale $D_{opt}$ ou s'approche de la disparité optimale $D_{opt}$ au maximum par le montant $D_F > 0$, et
   - une unité de présentation comprenant au moins le dispositif d'affichage pour l'affichage des perspectives comprenant les perspectives la plus à gauche et la plus à droite calculées et les perspectives fournies, sur le dispositif d'affichage utilisé, le dispositif d'affichage présentant une disparité optimale $D_{opt}$ spécifique à l'appareil.

8. Procédé selon la revendication 7, dans lequel le dispositif d'affichage est un dispositif d'affichage auto-stéréoscopique, comprenant de préférence un écran auto-stéréoscopique et un élément optique, ou une paire de lunettes 3D.

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2013162764 A1
- EP 2393298 A1
- DE 10105423 C1, Peter Kauft
- DE 102011008886 A1, I.-H. Naske

**In der Beschreibung aufgeführte Nicht-Patentliteratur**

- **L. FALKENHAGEN.** Blockbasierte Disparitätsschätzung unter Berücksichtigung statistischer Abhängigkeiten der Disparität. *Fortschr.-Ber.,* 2001, vol. 10 (657), ISSN ISBN 3-18-365710-4